Europäisches Patentamt

European Patent Office

Office européen des brevets

(19)

(11) EP 0 730 267 B1

(12) EUROPÄISCHE PATENTSCHRIFT

(45) Veröffentlichungstag und Bekanntmachung des Hinweises auf die Patenterteilung:
07.01.1999 Patentblatt 1999/01

(51) Int Cl.⁶: G11B 5/842

(21) Anmeldenummer: 96101548.4

(22) Anmeldetag: 03.02.1996

(54) **Vorrichtung zur Herstellung eines magnetischen Aufzeichnungsträgers**

Apparatus for producing magnetic recording medium

Dispositif pour fabriquer un support d'enregistrement magnétique

(84) Benannte Vertragsstaaten:
DE FR GB

(30) Priorität: 15.02.1995 DE 19504930

(43) Veröffentlichungstag der Anmeldung:
04.09.1996 Patentblatt 1996/36

(73) Patentinhaber: EMTEC Magnetics GmbH
67059 Ludwigshafen (DE)

(72) Erfinder:
• Richter, Volker
D-69118 Heidelberg (DE)
• Nagel, Peter
D-77731 Willstätt (DE)

• Wagner, Hans-Günter
D-67271 Neuleiningen (DE)
• Lenz, Werner
D-67098 Bad Dürkheim (DE)
• Gilbert, Norbert
D-67150 Niederkirchen (DE)

(56) Entgegenhaltungen:
EP-A- 0 451 863            EP-A- 0 542 635
DE-A- 4 008 005            US-A- 5 035 948

• PATENT ABSTRACTS OF JAPAN vol. 095, no. 001, 28.Februar 1995 & JP 06 296917 A (FUJI PHOTO FILM CO LTD), 25.Oktober 1994, & US 5 425 967 A (MIKIO TOMARU) 20.Juni 1995

**Beschreibung**

Die Erfindung betrifft eine Vorrichtung zum gleichzeitigen Auftragen mehrerer übereinanderliegender Schichten, von denen mindestens eine Schicht magnetisierbar ist, auf einen bewegten flexiblen Schichtträger mittels mehrerer in einem mehrteiligen Block im wesentlichen parallel zueinander angeordneter aus Reservoiren gespeister Gießerschlitze, wobei die Durchströmung der Reservoire parallel zu den Austrittsöffnungen der Gießerschlitze ist, wobei die Austrittsöffnungen der Gießerschlitze im wesentlichen dem Scheitelpunkt einer konvex geformten Auflagefläche gegenüberliegen, über die der Schichtträger läuft und wobei der ankommende Schichtträger die aus den Gießerschlitzen austretenden Schichten aufnimmt, sowie ein Verfahren für damit hergestellte magnetische Aufzeichnugsträger.

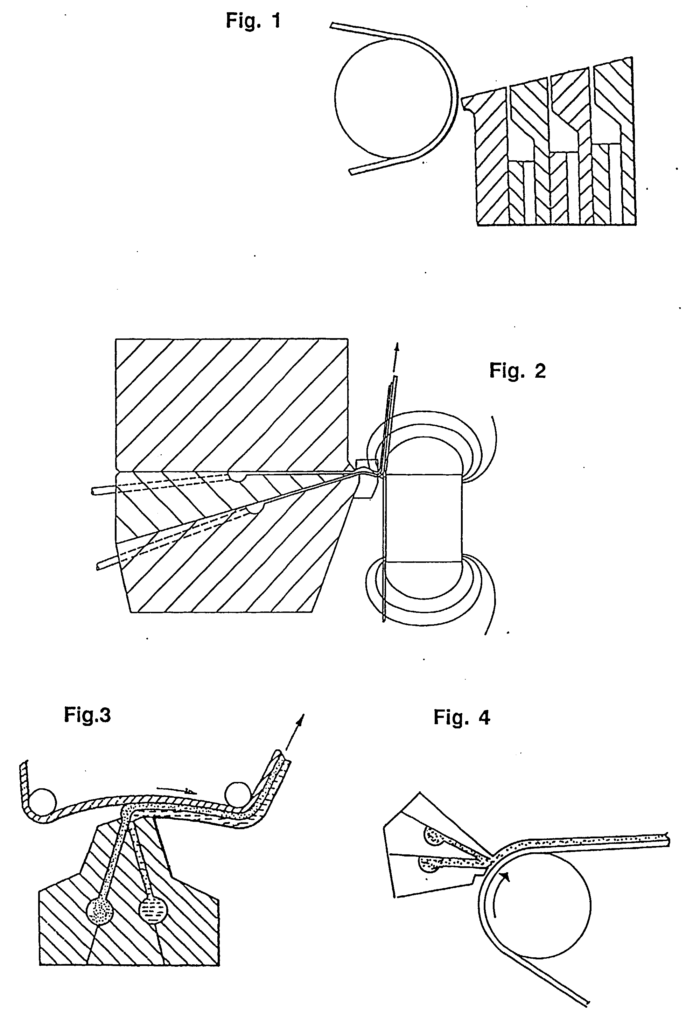

Zur Herstellung von Aufzeichnungsträgern, welche heutzutage im allgemeinen aus mehreren übereinanderliegenden Schichten bestehen, existieren eine große Anzahl verschiedener Beschichtungsverfahren, die je nach Aufbau des Aufzeichnungsträgers und der zur Herstellung derartiger Aufzeichnungsträger erforderlichen Teilschichten sehr unterschiedlich sind. So werden fotografische Aufzeichnungsträger, welche aus über zehn Schichten bestehen können, größtenteils mittels sogenannter Kaskadengießer oder andernfalls sogenannter Vorhanggießer hergestellt. Beim Kaskadengießer, welcher in Figur 1 schematisch dargestellt ist, laufen auf einer schräg abfallenden Fläche mehrere übereinanderfließende Dispersionen gleichzeitig zur Ablaufkante und werden von einem senkrecht nach oben vorbeibewegten Schichtträger mitgenommen, wobei die aus den Schichten gebildete Fluidbrücke durch einen leichten Unterdruck unterhalb der Ablaufkante stabilisiert wird. Beim Vorhanggießer fallen die einzelnen aus einer Gießeröffnung extrudierten Dispersionen einzeln in einem Vorhang auf den waagerecht vorbeigezogenen Schichtträger herab und werden auf diese Weise übereinander aufgetragen.

Für den Auftrag magnetisierbarer Schichten, deren Dispersionen im allgemeinen eine wesentlich höhere Viskosität haben, gibt es mehrere Methoden. Eine die feinteiligen magnetischen Pigmente enthaltende Dispersion, wobei diese Pigmente in einer polymeren Bindemittelmatrix feinverteilt vorliegen, kann mittels Messergießer, Abstreifgießer, Rasterwalzenauftrag, Reverse-Roll-Coater oder Extrudergießer auf den Schichtträger aufgebracht werden. Ein Extrudergießer zum gleichzeitigen Auftragen mehrerer übereinanderliegender Schichten ist aus der PCT-Anmeldung EP 93/02017 bekannt. Dabei werden aus mindestens zwei Gießerschlitzen die Dispersionen auf einen flexiblen Schichtträger aufgetragen, wobei die Oberkante der oberen in Transportrichtung des Schichtträgers angeordneten Austrittsöffnung gegenüber der Unterkante der unteren Austrittsöffnung zurückgesetzt ist und wobei hinter dem Schichtträger parallel zu diesem ein quaderförmiger Magnet angeordnet ist, dessen obere Kante der gemeinsamen Austrittsöffnung der Gießerschlitze in einem Abstand von 0,1 bis 5 mm gegenübersteht und wobei zur Vermeidung von Randverdikkungen an den beiden Gießerändern eine Abstreifplatte angebracht ist, welche von der Extruderkante hinaus in Richtung der Materialbahn verlängert ist. Die Figur 2 zeigt schematisch den Aufbau eines derartigen Gießers, der vor allen Dingen den Vorteil bietet, daß die aufgetragenen Dispersionsmengen weitgehend unabhängig vom Abstand der Austrittsschlitze von der Materialbahn sind. Mit einem solchen Gießer hergestellte magnetische Aufzeichnungsträger sind aus den DE-A 42 34 608 und 42 43 846 bekannt.

Die Figur 3 zeigt schematisch den Aufbau eines Doppelabstreifgießers. Bei diesem werden zwei oder mehrere Dispersionen aus Gießerschlitzen, die im wesentlichen senkrecht nach oben verlaufen und sich an der Austrittsstelle vereinigen, auf einen waagerecht vorbeigezogenen Schichtträger aufgetragen, der über zwei Rollen entlang unter einer definierten Bahnspannung über den konkav geformten Gießerkopf geführt wird. Der Druck der dem Schichtträger zugeführten Dispersionen sowie insbesondere die Form der in Gießrichtung verlaufenden Ablaufkante und die Bahnspannung des Schichtträgers bestimmen die Dicke der aufgegossenen Schichten. Derartige Mehrfach-Abstreifgießer sind aus den EP-Anmeldungen 0 431 630, 0 452 959, 0 529 516, 0 537 778, 0 554 855, 0 557 769, 0 559 465, 0 566 124, 0 593 957, den US-Patenten 4 854 262 und 5 072 688 sowie der DE 40 08 005 bekannt. Dieses Gießverfahren hat den Nachteil, daß, wie aufgrund der vorausgehenden Erläuterung verständlich ist, die lokal aufgetragenen Dispersionsmengen von der Bahnspannung der zwischen den beiden Rollen frei aufgespannten Bahn stark abhängig sein können. Eventuelles Bahnflattern, welches sich insbesondere bei hohen Beschichtungsgeschwindigkeiten nur schwer vermeiden läßt, verursacht empfindliche Gießstörungen, die zur Unbrauchbarkeit des hergestellten Produkts führen. Außerdem werden bei diesem Gießverfahren relativ hohe Anforderungen an die Einhaltung von Viskositäts- beziehungsweise Fließgrenzenverhältnissen der Teilschichten gestellt, wie beispielsweise aus der Lehre der genannten DE-A 40 08 005 hervorgeht.

Schließlich ist in der US-Patentschrift 4 863 793 eine Gießvorrichtung erwähnt, welche in der Figur 4 schematisch dargestellt ist. Dabei werden aus zwei Gießerschlitzen, von denen einer etwa waagerecht verläuft und der andere schräg nach unten, die Dispersionen auf einen auf einer Gießwalze vorbeigeführten Schichtträger aufgetragen. Diese Gießvorrichtung unterscheidet sich von dem in Abbildung 3 gezeigten Doppelabstreifgießer dadurch, daß hier auf ein konvex gekrümmtes Substrat gegossen wird.

In allen oben angesprochenen Auftragsverfahren wird die mittlere Schichtdicke über die Zudosierung der Beschichtungskomponenten festgelegt.

Untersuchungen der Anmelderin haben gezeigt, daß bei der Herstellung mehrschichtiger magnetischer Aufzeichnungsträger ein sehr hoher technischer Aufwand besteht, insbesondere wenn die Aufgabe besteht, eine sehr dünne vorzugsweise magnetisierbare Schicht, deren Schichtdicke geringer als 1 µm ist, auf eine untere Schicht zu gießen, welche Bindemittel und unmagnetische Pigmente enthält.

Daher bestand die Aufgabe, eine Gießvorrichtung der oben genannten Art zur Herstellung magnetischer Aufzeichnungsträger zu finden, welche nicht die oben genannten Nachteile hat

- bei der insbesondere der Auftrag auch sehr dünner magnetisierbarer und/oder unmagnetisierbarer Schichten möglich ist,

- wobei der lokale Auftrag unabhängig von der Bahnspannung sein soll,

- wobei die Viskositäten und Fließgrenzen der Teilschichten in weiten Grenzen gewählt werden können.

Erfindungsgemäß wurden die Aufgaben gelöst mit einer Vorrichtung gemäß Anspruch 1 und mit Verfahren nach Anspruch 10.

Weitere Einzelheiten der Erfindung gehen aus den Ansprüchen, der Beschreibung und den Zeichnungen hervor. Die Zeichnungen stellen dar

Figur 1      einen Schnitt durch einen konventionellen Kaskadengießer

Figur 2      einen Schnitt durch einen konventionellen Doppel-Extrudergießer

Figur 3      einen Schnitt durch einen konventionellen Doppel-Abstreifgießer

Figur 4      einen Schnitt durch einen weiteren konventionellen Doppel-Extrudergießer

Figur 5      einen Schnitt durch einen erfindungsgemäßen Messergießer mit zwei Austrittsspalten

Figur 5a     ein Schema des einteiligen Gießerblocks mit Gießwalze

Figur 5b     einen Schnitt durch eine bevorzugte Ausführung des Gießers

Figur 5c     einen Schnitt durch eine andere bevorzugte Ausführung

Figur 6      eine perspektivische Darstellung eines Mono-Gießerblocks mit Walze

Figur 7      einen Längsschnitt durch einen Teil des Gießerblocks

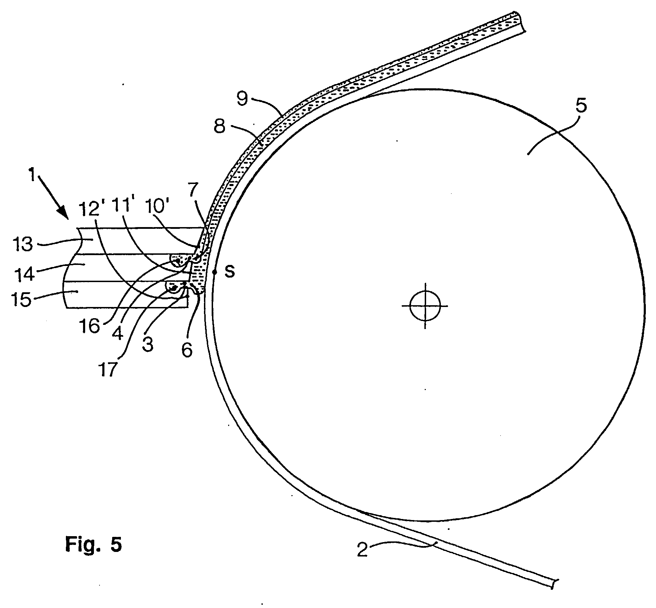

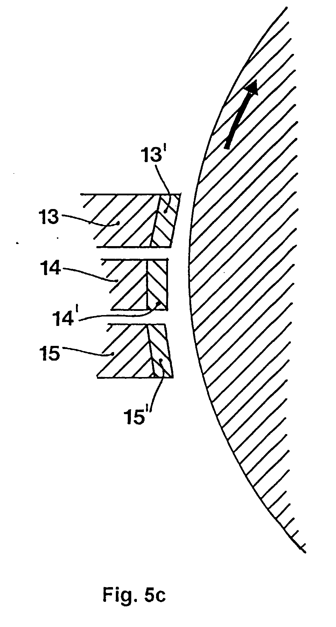

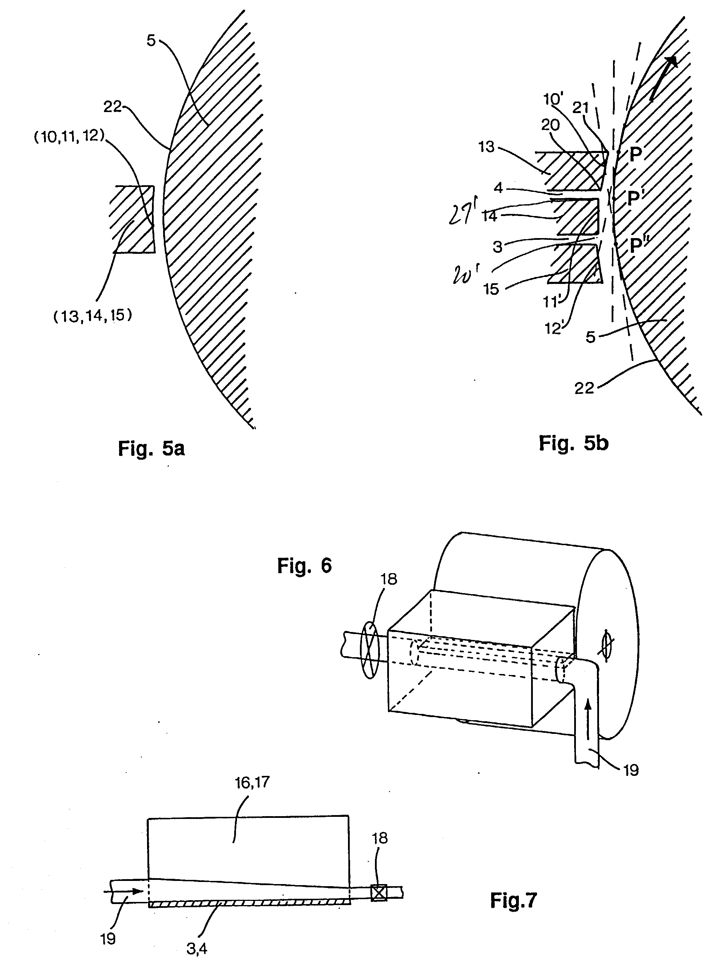

Im folgenden wird die Erfindung anhand der Figuren 5 bis 7 näher erläutert, wobei die Figur 5 die Erfindung anhand eines Doppelmessergießers zeigt. Selbstverständlich sind auch Mehrfach-Messergießer, mit denen mehr als zwei Schichten gleichzeitig aufgetragen werden können, erfindungsgemäß möglich. Der in Pfeilrichtung laufende flexible Schichtträger (2) wird im Bereich des Gießerblocks (1) über eine konvexe Auflagefläche (22), bevorzugt einen Teil des Umfangs einer drehbaren Gießwalze (5) geführt und verläßt den Umfang der Gießwalze nach Passieren des Gießerblocks. Gegenüber dem Scheitelpunkt S der Gießwalze (5) befindet sich davon beabstandet der Gießerblock (1).

Er besteht im wesentlichen aus den quaderförmig geformten Teilen (13, 14, 15), zwischen denen sich die Gießerschlitze (3, 4) zum Auftrag der unteren (8) beziehungsweise oberen Schicht (9) befinden. Diese Gießerschlitze verlaufen im wesentlichen parallel zueinander.

Die vorderen Flächen (10, 11, 12) des Gießerblocks (1) sind im Gegensatz zu der aus dem Stand der Technik bekannten in Figur 3 dargestellten Anordnung in einer bevorzugten Form nicht konvex, sondern konkav geformt und der Form beziehungsweise Oberfläche (22) der Gießwalze (5) angepaßt. Eine derartige Ausgestaltung ist schematisch aus der Figur 5a ersichtlich.

Eine andere ebenso bevorzugte Form ist aus der Figur 5b erkennbar. Dabei haben die vorderen Flächen (10', 11', 12') einen linearen Verlauf und sind so in Bezug auf den Zylinderumfang der Gießwalze angeordnet, daß ihre Parallelen eine Tangente an den Walzenumfang (22) bilden, wobei die Berührungspunkte P, P', P'' in die Richtung des Laufes der Gießwalze beziehungsweise des Schichtträgers weist. Mit anderen Worten ausgedrückt besitzt die vordere Kante (20) des Teilblockes (13) einen größeren radialen Abstand von dem Umfang (22) der Gießwalze als die hintere Kante (21). Jeder der Gießer-Teilblöcke (13, 14, 15) soll also nicht "schnäbeln"; dies gilt auch für die Anordnung gemäß Figur 5a. Davon ausgenommen ist der unterste Einlauf-Block (15).

Natürlich können die Vorderflächen (10, 10', 11, 11', 12, 12') des Gießerblocks auch "gemischt" auftreten, das heißt, der Gießerblock kann auch beispielsweise die Konfiguration (10, 11', 12) oder (10', 11, 12') haben.

Um unterschiedliche Schichtaufträge zu ermöglichen, ist einmal der horizontale Abstand des Blockes (1) vom Umfang der Gießwalze (5) als Ganzes stufenlos verstellbar. Außerdem ist es möglich, den Abschlußblock (13), welcher die Breite des Gießerschlitzes (4) zum Auftrag der oberen Schicht begrenzt, noch einmal separat horizontal zu verstellen, so daß auch der Schichtauftrag der oberen Schicht einzeln stufenlos einstellbar ist. Zweckmäßigerweise wird beim Anfahren des Messergießers so vorgegangen, daß zunächst ein weiterer Abstand zwischen Austrittsöffnungen (6, 7) sowie dem Schichtträger (2) gewählt wird, daß, wie anschließend näher erläutert, aus den Reservoiren (16, 17) die Gießerschlitze (3, 4) mit Dispersion beschickt werden und daß, sobald diese Schichten auf den Schichtträger aufgetragen werden, die Abstände des Blockes (1) sowie des Teilblockes (13) so verstellt werden, bis die erforderliche Schichtdicke der beiden Teilschichten (8, 9) erreicht ist, so daß bei laufendem Bahnbetrieb diese Feineinstellung erfolgen kann. Meßverfahren zur Einstellung der erforderlichen Schichtdicke sind aus dem Stand der Technik in ausreichender Zahl bekannt.

Der Werkstoff für die Gießerblocke (13; 14, 15) ist unmagnetischer Stahl; zwischen den Gießerblöcken befindet sich als gleitfähige (nicht dargestellte) Zwischenlage beispielsweise aus Messing bestehende Gleitstücke.

Eine gegenüber Figur 5 b geänderte Ausführung des Gießerblocks ist aus Figur 5 c ersichtlich. Dabei besteht jeweils der vordere der Gießwalze zugewandte Teil (13', 14', 15') der Gießerblöcke entweder aus einem anderen Material, beispielsweise Glas, Keramik, Hartmetall, oder aus Metallen, Glas oder Keramik mit oberflächenharter Beschichtung. Diese Beschichtung kann durch Verchromen, Vernickeln, Plasmaspritzen, Vakuum-Plasmaspritzen, Lichtbogenspritzen, Borieren, Aufbringen von Legierungen oder ähnlichen Verfahren erreicht werden. Es müssen aber nicht alle Gießerblöcke (13, 14, 15) zweiteilig gestaltet sein.

Im folgenden wird anhand der Figuren 5, 6 und 7 die Beschickung der Gießerschlitze mit Dispersion geschildert. Die hohlraumförmigen, beispielsweise Kreisraum besitzenden Reservoire (16, 17) werden parallel zur Erstreckung der Austrittsöffnungen (6, 7) mit der Dispersion durchströmt, wie die perspektivische Figur 6 anhand eines Reservoirs zeigt. In der das Reservoir speisenden Leitung (19) befindet sich ein Drosselventil (18) zur Regelung der Durchflußmenge und des Systemdruckes im Gießerschlitz (3) beziehungsweise (4). Die Länge der Gießerschlitze (3, 4), also der Abstand zwischen Reservoir (16, 17) und Austrittsöffnung (6, 7), kann zwischen 10 - 70 mm betragen.

Die Schlitzbreiten der unteren beziehungsweise oberen Austrittsöffnungen (6, 7) betragen für die untere Schicht 0,2 bis 8 mm und für die obere Schicht vorzugsweise 0,2 bis 6 mm. Die Gießlippenbreite (11) des mittleren Blockes (14) beträgt 0,5 bis 3 mm, die Länge der Einlauffläche (12) des ersten Teilblockes (15) beträgt mehr als 2 mm und die Länge der auslaufenden Fläche (10) des obersten (letzten) Blockes (13) beträgt zwischen 1 - 3 mm.

Die Figur 7 stellt einen Schnitt durch einen das Reservoir (16, 17) enthaltenden Block in einer anderen Version dar. Aus der Figur geht hervor, daß sich der Querschnitt des Reservoirs in Fließrichtung verengt, um auf diese Weise einen konstanten Materialstrom durch die Gießerschlitze (3, 4) in Richtung der Ausflußöffnungen (6, 7) zu gewährleisten. In jedem Fall ist es, wie bereits ausgesagt, wichtig, daß der Gießer nicht "schnäbelt", das heißt, die der Bahn gegenüberliegenden Austrittsflächen des Gießerblockes bilden mit der Bahn einen Gießspalt, der sich in Bahnlaufrichtung nicht erweitert, sondern vorteilhafterweise sich verengt. Davon ausgenommen ist die Einlauffläche (12'). Beispielsweise beträgt der Einlaufspalt 15 µm und der Auslaufspalt 10 µm. Der Radius der oberen und unteren Kanten (20, 21) der Vorderflächen (10, 10', 11, 11', 12, 12') soll möglichst klein sein, er darf höchstens 100 µm betragen. Der Durchmesser der Gießwalze ist im allgemeinen zwischen 100 und 700 mm dimensioniert.

Für die Zusammensetzung der die magnetischen Pigmente enthaltenden Schicht wie der unmagnetischen Schicht gibt es prinzipiell keine Beschränkungen.

Es können die aus dem Stand der Technik bekannten magnetischen Pigmente wie Eisenoxid, Co-dotierte Eisenoxide, Metallpigmente und -legierungen, Chromdioxid und andere eingesetzt werden, ebenso die üblichen polymeren Bindemittel oder - mischungen sowie die sonstigen Zusätze wie Dispergierhilfsmittel, unmagnetische Pigmente, Gleitmittel, Härtungsmittel, Netzmittel und Lösemittel verwendet werden.

Infrage kommende Bestandteile der magnetischen sowie der unmagnetischen Schicht sind beispielsweise der DE-A 43 02 516 zu entnehmen.

Als Schichtträger dienen bekannte Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden. Der Schichtträger kann vorher einer Koronaentladungsbehandlung, einer Plasmabehandlung, einer leichten Adhäsionsbehandlung, einer Wärmebehandlung, einer Staubentfernungsbehandlung oder ähnlichem unterworfen werden. Um das Ziel der vorliegenden Erfindung zu erreichen, ist der unmagnetische Schichtträger ein solcher mit einer mittleren Mittellinien-Oberflächenrauhigkeit von im allgemeinen 0,03 µm oder weniger, vorzugsweise von 0,02 µm oder weniger, insbesondere von 0,01 µm oder weniger. Außerdem ist es erwünscht, daß der Träger nicht nur eine derart geringe mittlere Mittellinienoberflächen-Rauhigkeit -Rauhigkeit aufweist, sondern auch keine großen Vorsprünge (Erhebungen) von 1 um oder mehr besitzt. Das Rauhigkeitsprofil der Oberfläche des Trägers kann gewünschtenfalls frei kontrolliert (gesteuert) werden entsprechend der Größe und Menge des Füllstoffs, der dem Schichtträger zugesetzt werden soll. Beispiele für geeignete Füllstoffe sind Oxide und Carbonate von Ca, Si und Ti sowie organische feine Pulver von Acrylsubstanzen.

Das Verfahren zur Herstellung der magnetischen Dispersion umfaßt mindestens eine Verknetungsstufe, eine Dispergierstufe und gegebenenfalls eine Mischstufe, die vor und nach den vorhergehenden Stufen vorgesehen sein kann. Die jeweiligen Stufen können jeweils aus zwei oder mehr Stufen zusammengesetzt sein. Bei der Herstellung der Zusammensetzung können alle Ausgangsmaterialien, nämlich das ferromagnetische Pulver, das Bindemittel, der Ruß, das Schleifmittel, das Antistatikmittel, das Schmiermittel und das Lösungsmittel, gleich zu Beginn des Verfahrens oder später während des Ablaufs des Verfahrens dem Reaktor zugesetzt werden. Die einzelnen Ausgangsmaterialien können in mehrere Portionen unterteilt werden, die in zwei oder mehr Stufen dem Verfahren zugesetzt werden. So wird beispielsweise das Polyurethan in mehrere Portionen unterteilt und in der Verknetungsstufe und in der Dispergierstufe und auch in der Mischstufe zur Einstellung der Viskosität nach dem Dispergieren zugegeben.

Um das Ziel der vorliegenden Erfindung zu erreichen, kann auch eine bekannte herkömmliche Technologie als Teil des Verfahrens zur Herstellung des erfindungsgemäßen Magnetaufzeichnungsmediums verwendet werden. So kann zum Beispiel in der Verknetungsstufe eine Verknetungsvorrichtung mit einer hohen Knetkraft, wie zum Beispiel ein kontinuierlicher Kneter oder ein Druck-Kneter verwendet werden, um ein erfindungsgemäßes Magnetaufzeichnungsmedium mit einem hohen Br-Wert zu erhalten. Wenn ein solcher kontinuierlicher Kneter oder Druckkneter verwendet wird, wird das ferromagnetische Pulver mit dem gesamten Bindemittel, vorzugsweise 30 Gew.% oder mehr, verknetet. So werden beispielsweise 100 Gew.-Teile eines ferromagnetischen Pulvers mit 15 bis 500 Gew.-Teilen eines Bindemittels gemischt.

Nach Feinfiltration durch engmaschige Filter mit einer Weite von höchstens 5 um werden die Dispersionen mittels der erfindungsgemäßen Vorrichtung mit Geschwindigkeiten im üblichen Bereich von 100 - 500 m/min aufgetragen, im Magnetfeld in Aufzeichnungsrichtung ausgerichtet und anschließend getrocknet und einer Kalanderbehandlung und gegebenenfalls einer weiteren Oberflächen-Glättungsbehandlung unterzogen.

Anschließend wird der so erhaltene magnetische Aufzeichnungsträger in die übliche Gebrauchsbreite längsgeschnitten oder gestanzt und den üblichen elektroakustischen sowie den mechanischen Prüfungen unterzogen.

Besonders günstige Ergebnisse werden - wie bereits eingangs ausgeführt - mit der erfindungsgemäßen Vorrichtung dann erhalten, wenn eine sehr dünne magnetische Oberschicht, deren Schichtdicke weniger als 1 μm beträgt, auf eine unmagnetische Unterschicht, deren Schichtdicke 1 - 8 μm betragen kann, gegossen werden soll.

Dabei wurde überraschend gefunden, daß die Bereiche der Viskosität η und der Fließgrenze τ der Oberschicht (OS) und der Unterschicht (US) sowie deren Verhältnisse in sehr weiten Grenzen variiert werden können, ohne daß begußtechnische Schwierigkeiten auftreten.

Für die Fließgrenze τ wurden folgende Bereiche als günstig gefunden

$$\tau_{US} = 0,5\text{-}80 \text{ Pa}$$

$$\tau_{OS} = 2 \text{ - } 30 \text{ Pa}$$

$$\frac{\tau US}{\tau OS} = 0,6 \text{ - } 10$$

Bezüglich der Viskositäten η waren die Bereiche, in denen ein einwandfreier Beguß erzielt werden konnte

$$\eta_{US} = 30 \text{ - } 100 \text{ mPas}$$

$$\eta_{OS} = 5 \text{ - } 70 \text{ mPas}$$

$$\frac{\eta US}{\eta OS} = 1 \text{ - } 10$$

Im folgenden wird die erfindungsgemäße Vorrichtung beispielhaft anhand von Doppelschichten zur Herstellung eines magnetischen Aufzeichnungsträgers für hochdichte Digitalaufzeichnung beschrieben.

**Beispiel 1**

| a) Zusammensetzung der unteren Schicht (8) | Gewichtsteile |
|---|---|
| Vinylpolymer mit polaren Gruppen | 85 |
| Polyurethan mit polaren Gruppen | 85 |
| $TiO_2$ (55 $m^2$/g BET) | 1000 |
| Gleitmittel | 25 |
| Polyisocyanat | 30 |
| Lösemittel (Tetrahydrofuran, Dioxan) | 2209 |

Die Viskosität dieser unteren Schicht (8) beträgt 50 mPas, die Fließgrenze beträgt 18 Pa.

| b) Zusammensetzung der oberen Schicht (9) | Gewichtsteile |
|---|---|
| magnetisierbares Metallpigment ($H_c$ = 150 kA/m, BET= 56 $m^2$/g) | 1000 |
| $\alpha$-$Al_2O_3$ (TG = 0,2 $\mu$m) | 70 |
| Vinylpolymer mit polaren Gruppen | 77 |
| Polyurethan mit polaren Gruppen | 77 |
| Phosphorsäureester | 10 |
| Gleitmittel | 25 |
| Polyisocyanat | 22,5 |
| Lösemittel (Tetrahydrofuran, Dioxan) | 6170 |

Die Viskosität dieser oberen Schicht (9) beträgt 8 mPas, die Fließgrenze 2,5 Pa.

Die Messung der Viskosität sowie der Fließgrenzen erfolgte mit einem Carri-Med CSL Rheometer im Meßsystem Kegel/Platte bei einer Temperatur von 25 °C und die Auswertung geschah nach Bingham (Abwärtskurve).

Mit diesen Dispersionen der genannten Zusammensetzung wird nun bei einer Beschichtungsgeschwindigkeit von 200 m/min. eine Doppelschicht (8, 9) aus den beiden Gießerschlitzen auf einen etwa 6 $\mu$m dicken Schichtträger, bestehend aus Polyethylenterephthalat, gezogen, wobei als minimale Trockenschichtdicke der unteren Schicht bis 1,5 $\mu$m und als minimale Trockenschichtdicke der oberen Schicht bis 0,1 $\mu$m erzielt werden konnte. Dabei wurde ein streifenfreier Beguß ohne Vermischungszone zwischen Ober- und Unterschicht erhalten.

**Beispiel 2**

a) Die Zusammensetzung der Unterschicht war wie in Beispiel 1

b) Zusammensetzung der oberen Schicht

| | Gew.-Teile |
|---|---|
| Magnetisierbares Metallpigment ($H_c$ = 120 kA/m, BET = 50 $m^2$/g) | 1000 |
| $\alpha$-$Al_2O_3$ (TG = 0,3 $\mu$m) | 110 |
| Vinylcopolymer mit Hydroxylgruppen | 75 |
| Acrylatcopolymer mit Carboxylgruppen | 50 |
| Polyurethan | 75 |
| Phosphorsäureester | 5 |
| Gleitmittelmischung | 30 |
| Polyisocyanat | 35 |
| Lösemittel (Tetrahydrofuran, Dioxan) | 2850 |

Fließgrenze $\tau$ = 25 Pa
Viskosität $\eta$ = 55 mPa·s

Auch mit dieser Zusammensetzung konnte bis zu Schichtdicken von 1,5 $\mu$m für die Unterschicht und 0,1 $\mu$m für

die Oberschicht ein einwandfreier Beguß erzielt werden.

**Beispiel 3**

Mit Zusammensetzungen für die Unter- und die Oberschicht wie im Beispiel 2 wurden durch Variation der Lösemittelmenge folgende rheologische Daten eingestellt:

US: $\eta = 72$ mPas, $\tau = 16$ Pa
OS: $\eta = 55$ mPas, $\tau = 25$ Pa

Die begußtechnischen Ergebnisse waren wie in den Beispielen 1 und 2.

**Patentansprüche**

1. Vorrichtung zum gleichzeitigen Auftragen mehrerer übereinanderliegender Schichten (8, 9), von denen mindestens eine Schicht magnetisierbar ist, auf einen bewegten flexiblen Schichtträger (2) mittels mehrerer in einem mehrteiligen Block (1) im wesentlichen parallel zueinander angeordneter aus Reservoiren (16, 17) gespeister Gießerschlitze (3, 4), wobei die Durchströmungsrichtung der Reservoire parallel zu den Austrittsöffnungen (6, 7) der Gießerschlitze ist, wobei die Austrittsöffnungen (6, 7) der Gießerschlitze im wesentlichen dem Scheitelpunkt S einer konvex geformten Auflagefläche (22) gegenüberliegen, über die der Schichtträger läuft, wobei der ankommende Schichtträger (2) die aus den Gießerschlitzen austretenden Schichten (8, 9) aufnimmt, dadurch gekennzeichnet, daß von den der Auflagefläche (22) gegenüberliegenden Austrittsflächen (10, 10', 11, 11', 12, 12') der Gießerblockteile (13, 14, 15) mindestens diejenige Austrittsfläche (10, 10', 11, 11'), welche den obersten Gießschlitz (4) begrenzt, so angeordnet ist, daß ihr Abstand von der Auflagefläche (22) an der Einlaufkante (20, 20') gleich oder größer ist als an der Auslaufkante (21, 21').

2. Vorrichtung nach Anspruch 1, dadurch gekennzeichnet, daß die Auflagefläche (22) die zylindrische Außenfläche einer drehbaren Führungswalze (5) darstellt.

3. Vorrichtung nach Anspruch 1, dadurch gekennzeichnet, daß mindestens eine der Austrittsflächen (10, 11, 12) konkav geformt und der Außenform (22) der Walze (5) angepaßt ist (Figur 5a).

4. Vorrichtung nach Anspruch 1, dadurch gekennzeichnet, daß mindestens eine der Austrittsflächen (10', 11', 12') linear verläuft (Figur 5b).

5. Vorrichtung nach Anspruch 1, dadurch gekennzeichnet, daß der radiale Abstand des Blockes (1) von der Walze (5) als ganzes verstellbar ist sowie daß der radiale Abstand des den oberen Gießerschlitz (4) nach oben begrenzenden Abschlußkörpers (13) des Gießerblocks zur Walze (5) separat in radialer Richtung verstellbar ist.

6. Vorrichtung nach Anspruch 1, dadurch gekennzeichnet, daß der vordere Teil (13', 14', 15') mindestens eines Gießerblocks (13, 14, 15) entweder aus einem anderen Material besteht oder mit einer Beschichtung versehen ist.

7. Vorrichtung nach Anspruch 1 und 6, dadurch gekennzeichnet, daß die Gießerblöcke aus unmagnetischem Stahl und daß deren vorderer Teil aus verchromtem Stahl, Glas, Keramik oder Hartmetall bestehen und/oder mit einer Beschichtung versehen sind.

8. Vorrichtung nach Anspruch 1, dadurch gekennzeichnet, daß die Reservoire (16, 17) senkrecht zur Erstreckung der Gießerschlitze (3, 4) durchströmt werden, wobei im Dispersionsstrom ein Drosselventil (18) zur Steuerung der Durchflußmenge der Dispersion angeordnet ist.

9. Vorrichtung nach Anspruch 8, dadurch gekennzeichnet, daß der Querschnitt (19) jedes Reservoirs in Fließrichtung der Dispersion im Gießerblock (1) sich konisch verlaufend verjüngt.

10. Verfahren zur Herstellung eines aus mehreren Schichten aufgebauten magnetischen Aufzeichnungsträgers mit einer Schichtdicke der magnetischen Oberschicht bis zu einer Untergrenze von 0,1 µm und einer Schichtdicke der Unterschicht bis zu einer Untergrenze von 1,5 µm, dadurch gekennzeichnet, daß eine Vorrichtung gemäß den Ansprüchen 1 bis 9 eingesetzt wird.

11. Verfahren zur Herstellung eines aus mehreren Schichten aufgebauten magnetischen Aufzeichnungsträgers nach Anspruch 10, wobei die Viskosität η der Oberschicht im Bereich von 5 bis 70 mPas, die der Unterschicht im Bereich von 30 bis 100 mPas und die Fließgrenze τ der Oberschicht im Bereich von 2 bis 30 Pa und die der Unterschicht im Bereich von 5 bis 80 Pa liegt, dadurch gekennzeichnet, daß eine Vorrichtung gemäß den Ansprüchen 1 bis 9 eingesetzt wird.

12. Verfahren zur Herstellung eines aus mehreren Schichten aufgebauten magnetischen Aufzeichnungsträgers nach Anspruch 11, wobei das Verhältnis der Viskosität η von Unterschicht zu Oberschicht im Bereich 1 bis 10 wählbar ist und daß das Verhältnis der Fließgrenze τ von Unterschicht zu Oberschicht im Bereich 0,6 bis 10 einstellbar ist, dadurch gekennzeichnet, daß eine Vorrichtung gemäß den Ansprüchen 1 bis 9 eingesetzt wird.

**Claims**

1. Apparatus for the simultaneous application of a plurality of layers (8, 9), which are located one on top of the other and at least one of which is magnetizable, to a moving flexible substrate (2) by means of a plurality of coater slots (3, 4) which are arranged essentially parallel to one another in a multipart block (1) and are fed from reservoirs (16, 17), the direction of flow through the reservoirs being parallel to the outlet orifices (6, 7) of the coater slots, the outlet orifices (6, 7) of the coater slots being essentially opposite the summit S of a convex support surface (22) over which the substrate runs and the incoming substrate (2) receiving the layers (8, 9) which emerge from the coater slots, wherein, among those outlet surfaces (10, 10', 11, 11', 12, 12') of the coater block parts (13, 14, 15) which are opposite the support surface (22), at least that outlet surface (10, 10', 11, 11') which bounds the uppermost coater slot (4) is arranged so that its distance from the support surface (22) at the inflow edge (20, 20') is equal to or greater than that at the outflow edge (21, 21').

2. Apparatus as claimed in claim 1, wherein the support surface (22) is the cylindrical outer surface of a rotatable guide roll (5).

3. Apparatus as claimed in claim 1, wherein at least one of the outlet surfaces (10, 11, 12) is concave and is adapted to the external shape (22) of the roll (5) (Figure 5a).

4. Apparatus as claimed in claim 1, wherein at least one of the outlet surfaces (10', 11', 12') is linear (Figure 5b).

5. Apparatus as claimed in claim 1, wherein the radial distance of the block (1) from the roll (5) as a whole is adjustable and the radial distance of that terminating element (13) of the coater block which bounds the upper coater slot (4) at the top from the roll (5) is separately adjustable in the radial direction.

6. Apparatus as claimed in claim 1, wherein the front part (13', 14', 15') of at least one coater block (13, 14, 15) either consists of a different material or is provided with a coating.

7. Apparatus as claimed in claims 1 and 6, wherein the coater blocks consist of a nonmagnetic steel and wherein their front part consists of chromium-plated steel, glass, ceramic or tungsten carbide and/or is provided with a coating.

8. Apparatus as claimed in claim 1, wherein the flow through the reservoirs (16, 17) is perpendicular to the extension of the coater slots (3, 4), a throttle valve (18) for controlling the flow rate of the dispersion being arranged in the dispersion stream.

9. Apparatus as claimed in claim 8, wherein the cross-section (19) of each reservoir tapers conically in the direction of flow of the dispersion in the coater block (1).

10. A process for the production of a magnetic recording medium composed of a plurality of layers and having a thickness of the magnetic upper layer to a lower limit of 0.1 μm and a thickness of the lower layer to a lower limit of 1.5 μm, wherein an apparatus as claimed in any of claims 1 to 9 is used.

11. A process for the production of a magnetic recording medium composed of a plurality of layers, as claimed in Claim 10, the viscosity η of the upper layer being from 5 to 70 mPa.s, that of the lower layer being from 30 to 100 mPa.s and the flow limit τ of the upper layer being from 2 to 30 Pa and that of the lower layer being from 5 to 80 Pa, wherein an apparatus as claimed in any of Claims 1 to 9 is used.

12. A process for the production of a magnetic recording medium composed of a plurality of layers, as claimed in Claim 11, it being possible to choose the ratio of the viscosity η of lower layer to upper layer in the range from 1 to 10 and the ratio of the flow limit τ of lower layer to upper layer being adjustable in the range from 0.6 to 10, wherein an apparatus as claimed in any of claims 1 to 9 is used.

**Revendications**

1. Dispositif pour l'application simultanée de plusieurs couches superposées (8, 9), dont au moins une est aimantable, sur un substrat souple en mouvement (2) au moyen de plusieurs fentes de coulée (3, 4) placées sensiblement parallèlement les unes aux autres dans un bloc en plusieurs parties (1) et alimentées par des réservoirs (16, 17), la direction de traversée des réservoirs étant parallèle aux orifices de sortie (6, 7) des fentes de coulée, les orifices de sortie (6, 7) des fentes de coulée étant sensiblement en face du sommet S d'une surface convexe d'appui (22) sur laquelle passe le substrat, le substrat (2) qui arrive recevant les couches (8, 9) qui sortent des fentes de coulée, caractérisé par le fait qu'au moins celle (10', 10', 11, 11') des surfaces de sortie (10, 10', 11, 11', 12, 12'), situées en face de la surface d'appui (22), des parties du bloc de coulée (13, 14, 15) qui limite la fente de coulée supérieure (4) est placée de façon que la distance entre elle et la surface d'appui (22) soit la même ou plus grande sur le bord d'entrée (20, 20') que sur le bord de sortie (21, 21').

2. Dispositif selon la revendication 1, caractérisé par le fait que la surface d'appui (22) constitue la surface extérieure cylindrique d'un rouleau tournant de guidage (5).

3. Dispositif selon la revendication 1, caractérisé par le fait qu'au moins une des surfaces de sortie (10, 11, 12) est concave et adaptée à la forme extérieure (22) du rouleau (5) (fig. 5a).

4. Dispositif selon la revendication 1, caractérisé par le fait qu'au moins une des surfaces de sortie (10', 11', 12') est rectiligne (fig. 5b).

5. Dispositif selon la revendication 1, caractérisé par le fait que la distance radiale entre le bloc (1) et le rouleau (5) est réglable en bloc et que la distance radiale entre le rouleau (5) et le corps de fermeture (13) du bloc de coulée qui limite vers le haut la fente de coulée supérieure (4) est réglable séparément dans la direction radiale.

6. Dispositif selon la revendication 1, caractérisé par le fait que la partie avant (13', 14', 15') d'au moins un bloc de coulée (13, 14, 15) est soit faite d'une autre matière, soit pourvue d'un revêtement.

7. Dispositif selon les revendications 1 et 6, caractérisé par le fait que les blocs de coulée sont en acier amagnétique et leur partie avant est en acier chromé, verre, céramique ou métal dur et/ou est pourvue d'un revêtement.

8. Dispositif selon la revendication 1, caractérisé par le fait que les réservoirs (16, 17) sont parcourus perpendiculairement à l'étendue des fentes de coulée (3, 4), dans le courant de dispersion étant placé un réducteur de débit (18) pour le réglage du débit de la dispersion.

9. Dispositif selon la revendication 8, caractérisé par le fait que la section (19) de chaque réservoir diminue coniquement dans la direction d'écoulement de la dispersion dans le bloc de coulée (1).

10. Procédé de fabrication d'un support magnétique d'enregistrement constitué de plusieurs couches, dans lequel la couche supérieure magnétique a une épaisseur pouvant descendre jusqu'à 0,1 m et la couche inférieure une épaisseur pouvant descendre jusqu'à 1,5 m, caractérisé par le fait qu'il y est employé un dispositif selon les revendications 1 à 9.

11. Procédé de fabrication d'un support magnétique d'enregistrement constitué de plusieurs couches selon la revendication 10, dans lequel la viscosité de la couche supérieure est comprise entre 5 et 70 mPa.s et celle de la couche inférieure comprise entre 30 et 100 mPa.s et la limite d'écoulement de la couche supérieure est comprise entre 2 et 30 Pa et celle de la couche inférieure comprise entre 5 et 80 Pa, caractérisé par le fait qu'il y est employé un dispositif selon les revendications 1 à 9.

12. Procédé de fabrication d'un support magnétique d'enregistrement constitué de plusieurs couches selon la revendication 11, dans lequel le rapport de la viscosité de la couche inférieure à celle de la couche supérieure peut être choisi entre 1 et 10 et le rapport de la limite d'écoulement de la couche inférieure à celle de la couche supérieure peut être réglé entre 0,6 et 10, caractérisé par le fait qu'il y est employé un dispositif selon les revendications 1 à 9.

Fig. 1

Fig. 2

Fig.3

Fig. 4

Fig. 5

Fig. 5c

**Fig. 5a**

**Fig. 5b**

**Fig. 6**

**Fig.7**